# EUROPÄISCHE PATENTSCHRIFT

(11) **EP 1 500 570 B1**
(45) Veröffentlichungstag und Bekanntmachung des Hinweises auf die Patenterteilung: **26.07.2006**
(21) Anmeldenummer: 04012544.5
(22) Anmeldetag: 27.05.2004
(51) Int. Cl.: B62D 1/184

(54) **Feststelleinrichtung einer in mindestens eine Verstellrichtung verstellbaren Lenksäule**
Locking device of an adjustable steering column in at least one adjustment direction
Dispositif de blocage d'un colonne de direction réglable dans au moins un sens

(30) Priorität: 21.07.2003 DE 10333228
(43) Veröffentlichungstag der Anmeldung: 26.01.2005
(73) Patentinhaber: ThyssenKrupp Presta AG, 9492 Eschen (LI)
(72) Erfinder: Breuss, Hubert, 6805 Feldkirch-Gisingen (AT); Klukowski, Christoph, Dr., 8880 Walenstadt (CH); Lutz, Christian, 6714 Nüziders (AT)
(74) Vertreter: Hefel, Herbert

(56) Entgegenhaltungen:
- EP-A- 1 125 821

## Beschreibung

Die Erfindung betrifft eine Feststelleinrichtung einer in mindestens eine Verstellrichtung verstellbaren Lenksäule, mit mindestens einem der Verstellrichtung oder einer der Verstellrichtungen zugeordneten Feststellteil, welches zumindest eine erste und zumindest eine zweite Verzahnung aufweist, und mindestens einem dieser Verstellrichtung zugeordneten Gegenfeststellteil, welches zumindest eine erste und zumindest eine zweite Gegenverzahnung aufweist, und mit einer öffen-und schließbaren Spannvorrichtung, in deren geöffnetem Zustand die ersten und zweiten Verzahnungen von den ersten und zweiten Gegenverzahnungen beabstandet sind und in deren geschlossenem Zustand das Feststellteil und das Gegenfeststellteil miteinander in Zahneingriff stehen, wobei sich die Zähne der Verzahnungen und der Gegenverzahnungen quer zu dieser Verstellrichtung erstrecken und aufeinanderfolgende Zähne der Verzahnungen und Gegenverzahnungen jeweils gleiche Abstände voneinander aufweisen und die Spitzen der Zähne der Verzahnungen und Gegenverzahnungen jeweils in Ebenen liegen.

Verstellbare Lenksäulen sind in unterschiedlichen Ausführungsformen bekannt. Üblicherweise kann hierbei sowohl die Länge der Lenksäule als auch deren Neigung bzw. Höhe im geöffneten Zustand der Feststelleinrichtung verändert werden. Zur Fixierung des die Lenkspindel aufnehmenden Mantelrohrs im geschlossenen Zustand der Feststelleinrichtung können beispielsweise sich kreuzende Pakete von Lamellen vorgesehen sein, von denen das eine am Mantelrohr und das andere an einem chassisfesten Konsolenteil festgelegt ist und die von einem Spannbolzen durchsetzt werden und mittels der Spannvorrichtung gegenseitig verklemmt werden. Eine solche verstellbare Lenksäule ist beispielsweise aus der EP 0 802 104 B1 bekannt. Zur Ermöglichung der Verstellung sind in den Lamellenpaketen sowie im Mantelrohr und im Konsolenteil sich kreuzende Langlöcher angeordnet, die vom Spannbolzen durchsetzt werden. Nachteilig bei Lenksäulen mit Lamellen aufweisenden Feststelleinrichtungen ist es unter anderem, dass die erzielbaren Haltekräfte im geschlossenen Zustand auf die Reibung beschränkt sind und dass auch zur Erzielung einer möglichst hohen Haltekraft im geschlossenen Zustand eine relativ große Anzahl von Lamellen erforderlich ist, wodurch auch im geöffneten Zustand der Feststelleinrichtung eine relativ große Reibungskraft zur Verstellung der Lenksäule zu überwinden ist.

Aus der EP 0 836 981 B1 ist weiters eine verstellbare Lenksäule mit einer Feststelleinrichtung der eingangs genannten Art bekannt, bei der gezahnte Teile vorhanden sind, deren Zähne im geschlossenen Zustand der Feststelleinrichtung ineinander eingreifen. Die Verstellung der Lenksäule ist in geöffnetem Zustand sehr leichtgängig. Es kann bei einer solchen Feststelleinrichtung allerdings das Problem auftreten, dass die Spitzen der Zähne der einander gegenüberliegenden Verzahnungen sich unmittelbar gegenüber stehen (Zahn-auf-Zahn-Stellung) und beim Schließen der Spannvorrichtung aufeinander treffen, so daß die Feststelleinrichtung nicht ordnungsgemäß geschlossen werden kann. Im Crash-Fall kann es dadurch zu einer unkontrollierten Verschiebung der Lenksäule kommen. Außerdem ist das Schließen der Spannvorrichtung im Falle des Aufeinandertreffehs der Spitzen der Zähne nicht oder nicht vollständig oder nur unter stark erhöhtem Kraftaufwand bzw. erst nach einer weiteren Verstellung der Lenksäule möglich.

Es wurden daher bereits verschiedene Einrichtungen vorgeschlagen, mittels denen das Aufeinandertreffen der Zahnspitzen beim Schließen der Spannvorrichtung verhindert werden soll. Bei den Einrichtungen der DE 198 39 496 A1 und der US 5,787,759 A ist zu diesem Zweck eine verschwenkbare Lagerung eines der beiden die Zahnleisten aufweisenden Teile vorgesehen. Bei der Einrichtung der DE 39 14 608 C1 ist ein in Richtung der Ebene des Zahneingriffs verschiebbar gelagertes Rastelement vorgesehen, welches weiters um eine Achse parallel zur Längsausdehnung der Zähne begrenzt verschwenkbar ist. Aus der EP 0 796 780 A2 ist ein Führungsstift bekannt, der an einer seitlichen Führungsfläche an einem der beiden die Zahnleisten aufweisenden Bauteile anliegt, wobei die Führungsfläche eine Neigung aufweist, die etwa der Flankenneigung der Zähne entspricht. Diese Einrichtungen sind relativ aufwendig in ihren Konstruktionen, ohne die Gefahr des Aufeinandertreffens der Zahnspitzen unter allen Umständen ausschließen zu können. Bei der Feststelleinrichtung der DE 198 46 292 sind an den beiden gegenüberliegenden Zahnleisten Magnete vorgesehen, wobei die einander zugewandten freien Spitzen der Zähne durch magnetische Kräfte voneinander abgestoßen werden. Um durch diese magnetischen Einrichtungen ein Verschieben der beiden Bauteile bei einer direkt gegenüberliegenden Position der Spitzen der Zähne der beiden Zahnleisten zu erreichen, müssen relativ hohe magnetische Kräfte aufgebracht werden, was mit einem erheblichen Aufwand verbunden ist. Weiterhin offenbart die EP/125 821 die Merkmale des Oberbegrifts des Anspruchs 1.

Aufgabe der Erfindung ist, eine Feststelleinrichtung der eingangs genannten Art bereitzustellen, die in jeder Verstellposition der Lenksäule problemlos schließbar ist und die Lenksäule sicher in der eingestellten Position hält.

Erfindungsgemäß gelingt dies durch eine Feststelleinrichtung mit den Merkmalen des Patentanspruchs 1.

Durch die erfindungsgemäßen Maßnahmen wird es ausgeschlossen, dass sich sowohl die Spitzen der Zähne der ersten Verzahnung und der ersten Gegenverzahnung als auch die Spitzen der Zähne der zweiten Verzahnung und der zweiten Gegenverzahnung gleichzeitig in einer direkt gegenüberliegenden Position (Kopf-an-Kopf-Stellung) befinden. In allen Verstellpositionen der Lenksäule in die dem Feststellteil und Gegenfeststellteil zugeordnete Verstellrichtung gelangen im geschlossenen Zustand der Spannvorrichtung zumindest die Zähne einer der beiden Verzahnungen mit den Zähnen der entsprechenden Gegenverzahnung in Eingriff. Insbesondere kann dadurch eine stufenlose Verstellbarkeit der Lenksäule in die betreffende Verstellrichtung erreicht werden.

In einer vorteilhaften Ausführungsform ist die Feststelleinrichtung zumindest für die Höhenverstellung der Lenksäule in der erfindungsgemäßen Weise ausgebildet. Im Crash-Fall müssen hohe in Richtung der Höhenverstellung auf die Feststelleinrichtung wirkende Kräfte sicher aufgenommen werden können. Hierbei kann das Feststellteil von einer mit einem Spannbolzen der Spannvorrichtung zusammenwirkenden Klemmplatte und das Gegenfeststellteil von einer Seitenwange eines chassisfesten Konsolenteils gebildet werden. Der Spannbolzen durchsetzt eine Ausnehmung in einem die Lenkspindel lagernden Mantelrohr und weiters eine als Langlochausnehmung ausgebildete Ausnehmung im Gegenfeststellteil. Über diese Langlochausnehmung im Gegenfeststellteil ist der Spannbolzen gegenüber dem Gegenfeststellteil in Richtung der Höhenverstellung begrenzt verschiebbar. Die das Feststellteil bildende Klemmplatte ist auf dem Spannbolzen angeordnet, der sie durch eine Bohrung durchsetzt. Bei einer Verstellung der Lenksäule in Richtung der Höhen- bzw. Neigungsverstellung wird das Feststellteil mit dem Spannbolzen in diese Verstellrichtung mitbewegt, während das von der Seitenwange gebildete Gegenfeststellteil als Teil des chassisfesten Konsolenteils in die Verstellrichtung unverschiebbar ist. Zum Öffnen und Schließen der Spannvorrichtung kann ein manuell betätigbarer Spannhebel vorgesehen sein oder dieses kann motorisch erfolgen. Beim Schließen der Spannvorrichtung werden die Zähne der Verzahnungen und Gegenverzahnungen, die sich entlang von Geraden quer, vorzugsweise im Wesentlichen rechtwinklig, zu dieser Verstellrichtung erstrecken, miteinander in Eingriff gebracht.

Auch Ausführungsbeispiele der Erfindung sind denkbar und möglich, bei welchen auf die erfindungsgemäße Weise ausgebildete Feststellteile und Gegenfeststellteile im Zusammenhang mit der Längsverstellung der Lenksäule eingesetzt werden. Beispielsweise könnte hierbei ein die Lenksäule lagerndes Mantelrohr in Längsrichtung verschiebbar an einer Führungsschiene gelagert sein, wobei die Führungsschiene um eine quer zum Mantelrohr liegende Achse verschwenkbar an diesem gelagert ist. Ein Spannbolzen einer Spannvorrichtung durchsetzt hierbei ein in Richtung der Längsverstellung sich erstreckendes Langloch im Mantelrohr und trägt an seinem innerhalb des Mantelrohrs liegenden Endes eine Klemmplatte. Eine solche Konstruktion ist beispielsweise aus der EP 0 836 981 B1 bekannt. Die vom Spannbolzen getragene, innerhalb des Mantelrohrs angeordnete Klemmplatte könnte in diesem Fall das Feststellteil bilden und die ersten und zweiten Verzahnungen aufweisen und das Gegenfeststellteil könnte an der Innenseite des Mantelrohrs angeordnet sein bzw. von einem Abschnitt des Mantelrohrs gebildet sein und die mit den ersten und zweiten Verzahnungen zusammenwirkenden ersten und zweiten Gegenverzahnungen aufweisen. Auch die Fixierung der Höhenverstellung könnte bei einer solchen Konstruktion in der erfindungsgemäßen Weise erfolgen.

Zur Ermöglichung von Querverschiebungen (in Richtung senkrecht zur Verstellrichtung und senkrecht zur Schließrichtung, in welche das Feststellteil beim Schließen und Öffnen der Spannvorrichtung verschoben wird) zwischen dem Feststellteil und dem Gegenfeststellteil, die beim Schließen der Spannvorrichtung in Abhängigkeit von der Verstellposition auftreten können, wie in der Figurenbeschreibung noch genauer erläutert werden wird, kann ein ausreichendes Spiel zwischen dem Feststellteil und dem Gegenfeststellteil vorgesehen werden oder die Verzahnungen und/oder Gegenverzahnungen sind verschiebbar am Feststellteil bzw. Gegenfeststellteil angeordnet.

Weitere Vorteile und Einzelheiten der Erfindung werden im folgenden anhand eines in der beiliegenden Zeichnung dargestellten Ausführungsbeispiels erläutert. In der Zeichnung zeigen:
- Fig. 1: eine Seitenansicht eines Ausführungsbeispiels einer Lenksäule mit einer erfindungsgemäßen Feststelleinrichtung;
- Fig. 2: eine Seitenansicht der Lenksäule von Fig. 1 von der gegenüberliegenden Seite;
- Fig. 3: eine Draufsicht der Lenksäule;
- Fig. 4: eine perspektivische Darstellung, teilweise nach Art einer Explosionsdarstellung auseinandergezogen;
- Fig. 5: einen Schnitt entlang der Linie AA von Fig. 1;
- Fig. 6: einen Schnitt durch einen Teil der Lenksäule entlang der Linie BB von Fig. 2, im geschlossenen Zustand;
- Fig. 7: einen Schnitt entlang der Linie CC von Fig. 6;
- Fig. 8: einen Fig. 6 entsprechenden Schnitt, in einer geringfügig anderen Verstellposition der Lenksäule;
- Fig. 9: einen Schnitt entlang der Linie DD von Fig. 8;
- Fig. 10: eine perspektivische Darstellung von Abschnitten des Feststellteils und des Gegenfeststellteils, im geöffneten Zustand der Feststelleinrichtung;
- Fig. 11: eine Seitenansicht der Teile von Fig. 10;
- Fig. 12: eine Draufsicht auf das Gegenfeststellteil, Blickrichtung E in Fig. 11;
- Fig. 13: eine Fig. 10 entsprechende Darstellung, im geschlossenen Zustand der Feststelleinrichtung;
- Fig. 14: eine Seitenansicht entsprechend Fig. 11, im geschlossenen Zustand der Feststelleinrichtung;
- Fig. 15 die Fig.: einen Schnitt entlang der Linie FF von Fig. 14; 16 bis 18 und 19 bis 21 den Fig. 13 bis 15 entsprechende Darstellungen in zwei etwas gegenüber Fig. 13 veränderten Verstellpositionen der Lenksäule (die Fig. 18 und 21 sind Schnitte entlang der Linien GG und HH der Fig. 17 und 20);
- die Fig.: 22 und 23 den Fig. 6 und 7 entsprechende Darstellungen eines etwas modifizierten Ausführungsbeispiels (Fig. 23 ist ein Schnitt entlang der Linie II von Fig. 22);
- die Fig.: 24 und 25 den Fig. 6 und 7 entsprechende Darstellungen eines weiteren etwas modifizierten Ausführungsbeispiels (Fig. 25 ist ein Schnitt entlang der Linie KK von Fig. 24;

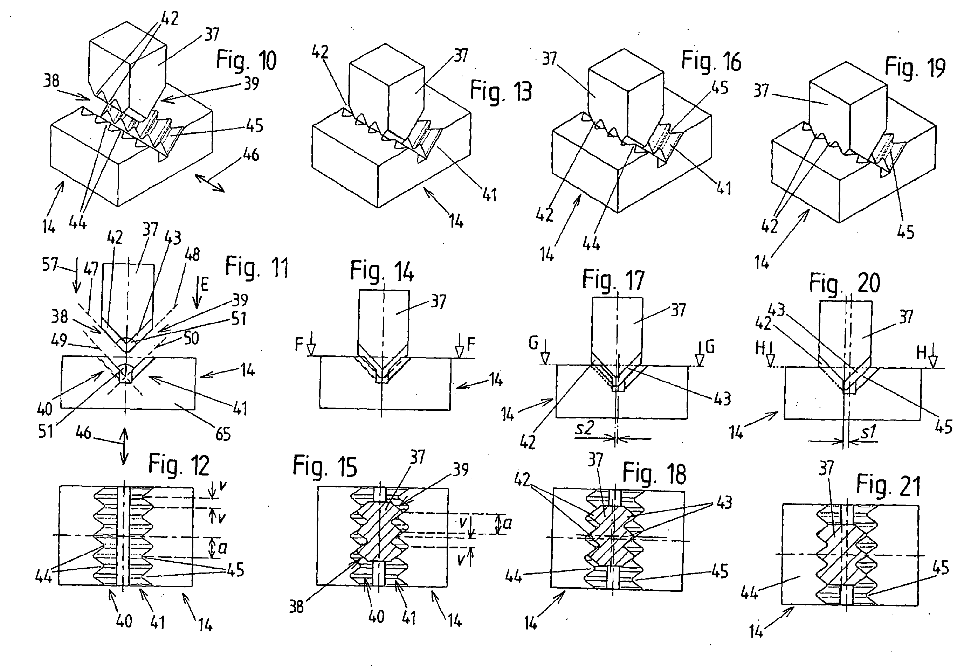

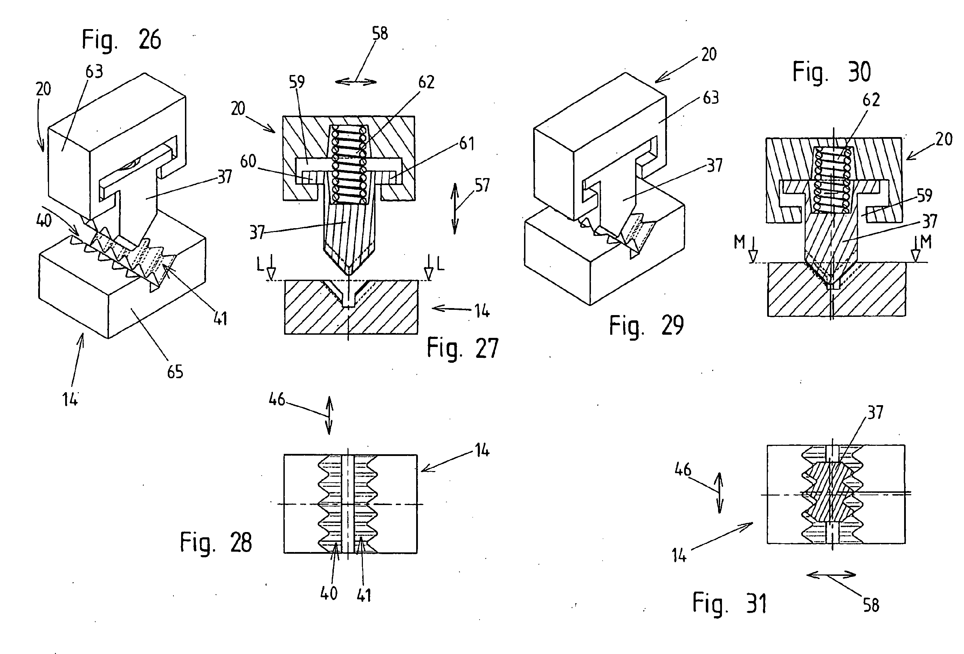

- Fig. 26: eine Fig. 10 entsprechende Darstellung eines weiteren modifizierten Ausführungsbeispiels;
- Fig. 27: einen Schnitt durch die Teile von Fig. 26 (Schnittebene parallel zur Längserstreckung der Zähne);
- Fig. 28: einen Schnitt entlang der Linie LL von Fig. 27;
- Fig. 29: eine Fig. 16 entsprechende Darstellung im geschlossenen Zustand der Feststelleinrichtung;
- Fig. 30: eine Fig. 27 entsprechende Darstellung im geschlossenen Zustand der Feststelleinrichtung;
- Fig. 31: einen Schnitt entlang der Linie MM von Fig. 30;

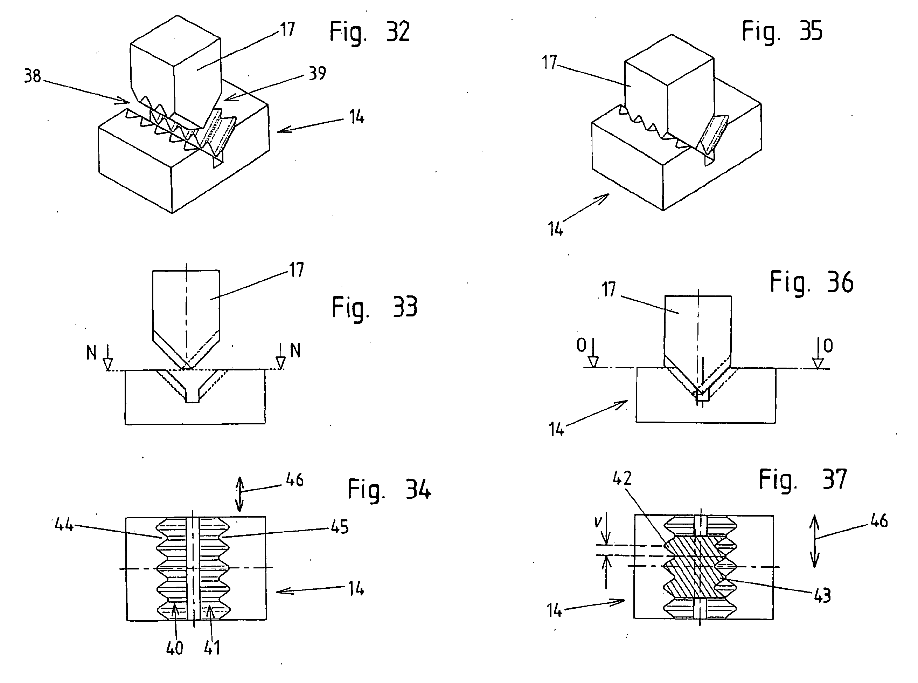

- Fig. 32: eine Fig. 10 entsprechende Darstellung einer weiteren modifizierten Ausführungsform der Erfindung;
- Fig. 33: eine Seitenansicht der Teile von Fig. 32;
- Fig. 34: einen Schnitt entlang der Linie NN von Fig. 33;
- Fig. 35: eine Fig. 32 entsprechende Darstellung, aber im geschlossenen Zustand der Feststelleinrichtung;
- Fig. 36: eine Seitenansicht der Teile von Fig. 35;
- Fig. 37: einen Schnitt entlang der Linie OO von Fig. 36;

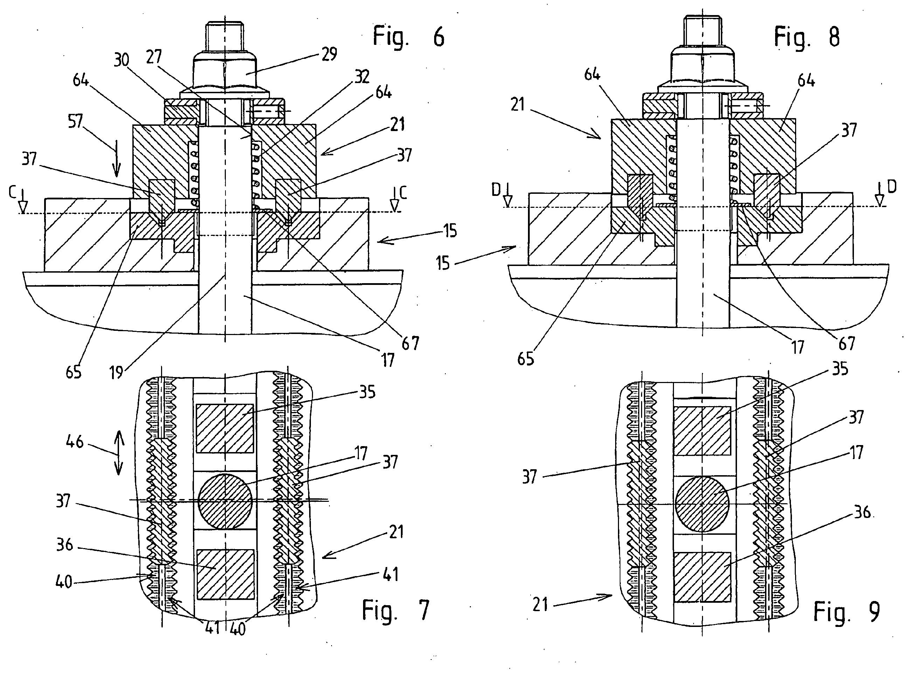

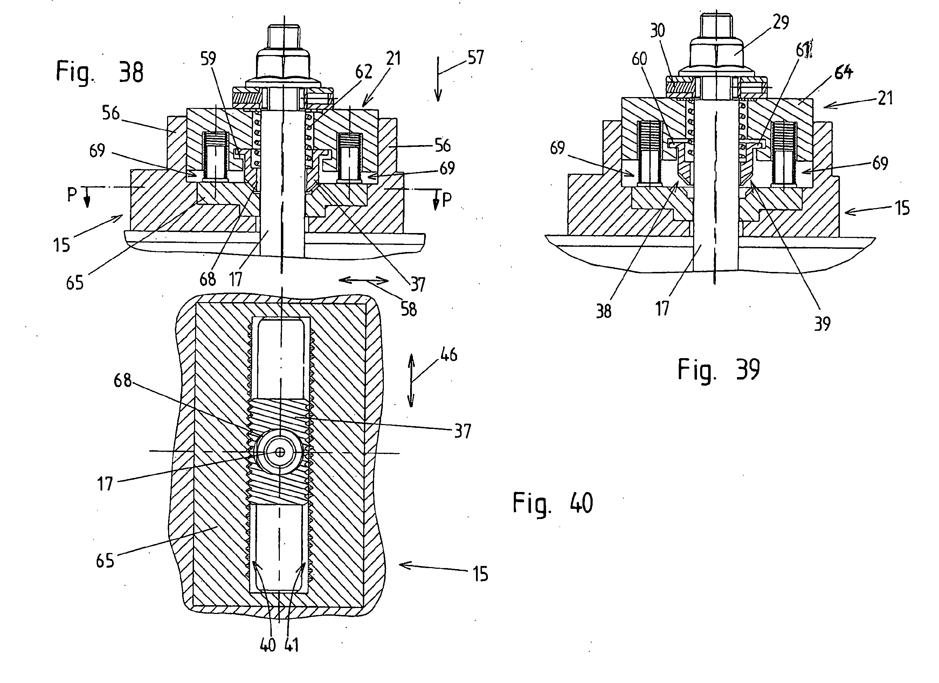

- Fig. 38: und 39 Fig. 6 entsprechende Darstellungen eines weiteren Ausführungsbeispiels der Erfindung, im geschlossenen und geöffneten Zustand der Spannvorrichtung;
- Fig. 40: einen Schnitt entlang der Linie PP von Fig. 38.

Das in den Fig. dargestellte Ausführungsbeispiel einer Lenksäule umfasst in herkömmlicher Weise ein Lenkspindel 1, die zumindest abschnittsweise von einem Mantelrohr 2 aufgenommen wird und gegenüber diesem drehbar ist. Das Mantelrohr 2 ist gegenüber einem Konsolenteil 3 begrenzt verstellbar. Im gezeigten Ausführungsbeispiel ist die Lenkspindel 1 längenverstellbar sowie höhen- bzw. neigungsverstellbar. Zur Längenverstellung weist die Lenkspindel 1 in herkömmlicher Weise zwei teleskopierbare Abschnitte 4, 5 auf. Bei der Höhenverstellung erfolgt eine Verschwenkung der Lenkspindel 1 und des Mantelrohrs 2 um eine Schwenkachse 6, wobei gleichzeitig mit der Höhenverstellung der Lenkspindel 1 im Bereich von ihrem vorderen Ende, an welchem ein Lenkrad angebracht wird, eine Neigungsverstellung der im Bereich des vorderen Endes 7 liegenden Längsachse 8 der Lenkspindel erfolgt. Die Schwenkachse 6 kann beispielsweise dadurch gebildet werden, dass ein die Lenkspindel 1 drehbar aufnehmendes und diese ringförmig umgebendes Teil vorgesehen ist, das beidseitig abstehende Bolzen aufweist, die drehbar in Laschen 9 des Konsolenteils 3 aufgenommen sind. An den Abschnitt 5 der Lenkspindel 1 schließen ein Kardangelenk 10 und ein weiterer Abschnitt 11 der Lenkspindel an, der in den Fig. nurmehr teilweise dargestellt ist. Die nicht dargestellten Teile der Lenkspindel können in herkömmlicher Weise ausgebildet sein.

Das Konsolenteil 3 weist ein Montageteil 12 zur Befestigung am Chassis eines Fahrzeuges auf. Am Montageteil 12 ist eine Trägerplatte 13 gehalten, die starr mit dem Montageteil verbunden sein kann. Es kann aber auch die Trägerplatte 13 im Montageteil 12 in definierter Weise verklemmt sein, wobei im Crash-Fall eine Verschiebung der Trägerplatte 13 in achsialer Richtung der Lenkspindel gegenüber dem Montageteil 12 möglich ist, wie dies bei herkömmlichen Lenksäulen bereits bekannt geworden ist. Im Normalbetrieb besteht zwischen der Trägerplatte 13 und dem Montageteil 12 aber eine unverschiebbare Verbindung.

An der Trägerplatte 13 sind Seitenwangen angebracht, die sich seitlich des Mantelrohrs 2 erstrecken und die im gezeigten Ausführungsbeispiel Gegenfeststellteile 14, 15 der im Folgenden beschriebenen Feststelleinrichtung bilden.

Die Feststelleinrichtung umfasst eine Spannvorrichtung, die im gezeigten Ausführungsbeispiel über einen manuell betätigbaren Spannhebel 16 öffen- und schließbar ist. Bei einer Verschwenkung des Spannhebels 16 wird eine auf einem Spannbolzen 17 drehbar gelagerte Nockenscheibe 18 um die Achse 19 des Spannbolzens 17 verschwenkt. Auf den Spannbolzen 17 ist weiters ein Feststellteil 21 angeordnet, das vom Spannbolzen 17 durch eine Bohrung in demselben durchsetzt wird. Auf der der Nockenscheibe 18 zugewandten Seite weist das Feststellteil 20 Schrägflächen 22 auf, die mit Nocken 23 der Nockenscheibe 18 zusammenwirken. Der Spannbolzen durchsetzt weiters ein senkrecht zur Längsachse 8 der Lenkspindel senkrecht zur Längsachse 8 der Lenkspindel 1 sich in Richtung der Höhenverstellung erstreckendes Langloch 24 im Gegenfeststellteil 14, ein in Richtung der Längsachse 8 sich erstreckendes Langloch 26 im Mantelrohr 2 und ein senkrecht zur Längsachse 8 der Lenkspindel 1 sich in Richtung der Höhenverstellung erstreckendes Langloch 25 im Gegenfeststellteil 15. Auf dem aus dem Gegenfeststellteil 15 herausragenden Abschnitt des Spannbolzens 17 ist weiters eine vom Spannbolzen 17 durch eine Bohrung 27 durchsetzte Klemmplatte angeordnet, die ein weiteres Feststellteil 21 bildet. Die Nockenscheibe 18 und das Feststellteil 21 stützen sich auf ihren von der Lenkspindel 1 abgewandten Seitenflächen gegen den Kopf 28 des Spannbolzens 17 einerseits und eine auf das gegenüberliegende mit einem Gewinde versehene Ende des Spannbolzens 17 aufgeschraubte Mutter 29 bzw. ein dazwischenliegendes Achsiallager 30 ab.

Beim Schließen der Spannvorrichtung durch Verschwenken des Spannhebels 16 werden die Feststellteile 20, 21 in die jeweilige Schließrichtung 57 (Fig. 6) verfahren und an die Gegenfeststellteile 14, 15 angedrückt, beim Öffnen der Spannvorrichtung heben sich die Feststellteile 20, 21 gegen die Schließrichtung 57 von den Gegenfeststellteilen 14, 15 ab, zu welchem Zweck Federn 31, 32 zwischen diesen Teilen angeordnet sind, die sich einerseits an den Feststellteilen 20, 21, andererseits an an den Gegenfeststellteilen 14, 15 anliegenden Gleitscheiben 66, 67 abstützen. Durch das Andrücken der Feststellteile 20, 21 an die Gegenfeststellteile 14, 15 beim Schließen der Spannvorrichtung wird die Höhen- bzw. Neigungsverstellung der Lenksäule in der eingestellten Position fixiert. Weiters werden beim Schließen der Spannvorrichtung aufgrund der auf die Gegenfeststellteile 14, 15 wirkenden Kraft diese mit ihren den Feststellteilen 20, 21 gegenüberliegenden Seitenflächen gegen die Seitenflächen 33, 34 des Mantelrohrs 2 angedrückt, wodurch zusätzlich die Längsverstellung der Lenksäule in diesem Ausführungsbeispiel in der eingestellten Position reibschlüssig fixiert wird (wobei dabei auch eine gegen eine Höhenverstellung wirkende Reibkraft ausgeübt wird).

Die Feststellteile 20, 21 sind gegenüber den Gegenfeststellteilen 14, 15 gegen eine Verschwenkung um die Achse des Spannbolzens 17 gesichert. Zu diesem Zweck weisen die Feststellteile 20, 21 im gezeigten Ausführungsbeispiel beidseitig des ihre Bohrungen 27 durchsetzenden Spannbolzen 17 Nasen 35, 36 auf, die in die Langlöcher 24, 25 der Gegenfeststellteile 14, 15 ragen, um im geöffneten Zustand der Spannvorrichtung bzw. beim Schließen der Spannvorrichtung als Führung zwischen den Feststellteilen 20, 21 und den Gegenfeststellteilen 14, 15 zu dienen.

Auf ihrer dem zugehörigen Gegenfeststellteil 14, 15 zugewandten Seite sind die Feststellteile 20, 21 mit Zahnleisten 37 versehen. Im gezeigten Ausführungsbeispiel sind die Zahnleisten in Vertiefungen von Grundkörpern 63, 64 der Feststellteile 20, 21 eingesetzt und starr mit den Grundkörpern 63, 64 verbunden. Auch eine einstückige Ausbildung der Zahnleisten 37 mit den Grundkörpern 63, 64 wäre denkbar und möglich.

Jede Zahnleiste 37 weist eine erste und eine zweite Verzahnung 38, 39 auf, wobei die ersten Verzahnungen 38 mit ersten Gegenverzahnungen 40 und die zweiten Verzahnungen 39 mit zweiten Gegenverzahnungen 41 der Gegenfeststellteile 14, 15 zusammenwirken. In den Fig. 10 bis 21 sind ein Abschnitt einer Zahnleiste 37 mit den daran angeordneten Abschnitten der Verzahnungen 38, 39 sowie ein Abschnitt eines Gegenfeststellteils 14 mit Abschnitten der mit den Verzahnungen 38, 39 zusammenwirkenden Gegenverzahnungen 40, 41 (die z. B. an Einsatzteilen 65 der Gegenfeststellteile 14, 15 angeordnet sind) dargestellt. Die Verzahnungen 38, 39 und Gegenverzahnungen 40, 41 weisen jeweils eine Reihe von Zähnen 42 bis 45 auf, die sich alle quer zur in den Fig. 10 und 12 durch Doppelpfeile angedeutet Verstellrichtung 46, in diesem Fall der Höhenverstellung, erstrecken. Hierbei erstrecken sich die Spitzen der Zähne entlang von Geraden, die quer zur Verstellrichtung, vorzugsweise senkrecht zur Verstellrichtung 46 liegen. Die Geraden, entlang derer die Spitzen der Zähne 42 bis 45 sich erstrecken, liegen hierbei für alle Zähne einer jeweiligen Verzahnung 38, 39 und einer jeweiligen Gegenverzahnung 40, 41 parallel zueinander. Im gezeigten Ausführungsbeispiel liegen diese Geraden weiters für die Zähne 42 der ersten Verzahnung parallel zu den Zähnen 44 der ersten Gegenverzahnung und für die Zähne 43 der zweiten Verzahnung parallel zu den Zähnen der zweiten Gegenverzahnung, und zwar sowohl im geschlossenen als auch im geöffneten Zustand der Spannvorrichtung. Die Zähne 42 bis 45 weisen alle die gleichen Abstände a voneinander auf, wobei diese Abstände a beispielsweise zwischen den Spitzen von benachbarten Zähnen zu messen sind.

Die Spitzen der Zähne 42 der ersten Verzahnung 38 liegen in einer gemeinsamen Ebene 47, ebenso liegen die Spitzen der Zähne 43 der zweiten Verzahnung in einer gemeinsamen Ebene 48. Die Spitzen der Zähne 44 der ersten Gegenverzahnung 40 liegen in einer gemeinsamen Ebene 49 und die Spitzen der Zähne 45 der zweiten Gegenverzahnung 41 liegen in einer gemeinsamen Ebene 50. Die Ebene 47 der Spitzen der Zähne 42 der ersten Verzahnung 38 und die Ebene 48 der Spitzen der Zähne 43 der zweiten Verzahnung 39 stehen V-förmig zueinander und schließen einen Winkel 51 zwischen sich ein. Im gezeigten Ausführungsbeispiel bilden die erste Verzahnung 38 und zweite Verzahnung 39 hierbei zusammen eine Art Pfeilverzahnung. Die Ebene 49 der Spitzen der Zähne 44 der ersten Gegenverzahnung 40 und die Ebene 50 der Zähne 45 der zweiten Gegenverzahnung 41 stehen ebenfalls V-förmig zueinander und schließen den gleichen Winkel 51 miteinander ein. Hierbei liegt die der ersten Verzahnung 38 zugehörige Ebene 47 parallel zur der ersten Gegenverzahnung 40 zugehörigen Ebene 49 und die der zweiten Verzahnung 39 zugehörige Ebene 48 parallel zur der zweiten Gegenverzahnung 41 zugehörigen Ebene 50. Die Gegenverzahnungen 40, 41 sind in einer im Querschnitt bzw. in Seitenansicht (Fig. 11) gesehen im Wesentlichen V-förmigen Vertiefung im Gegenfeststellteil 14 angeordnet.

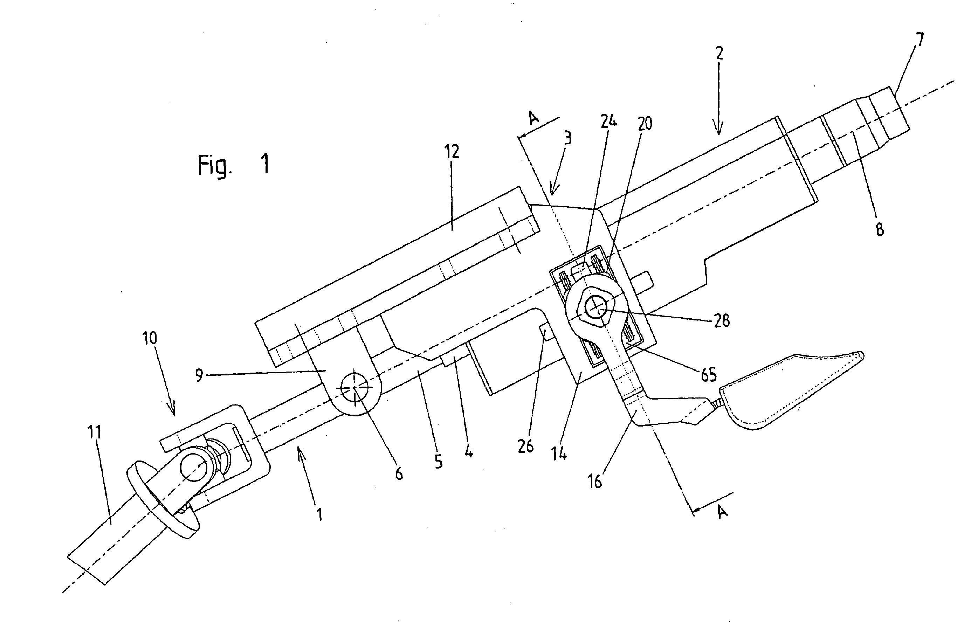

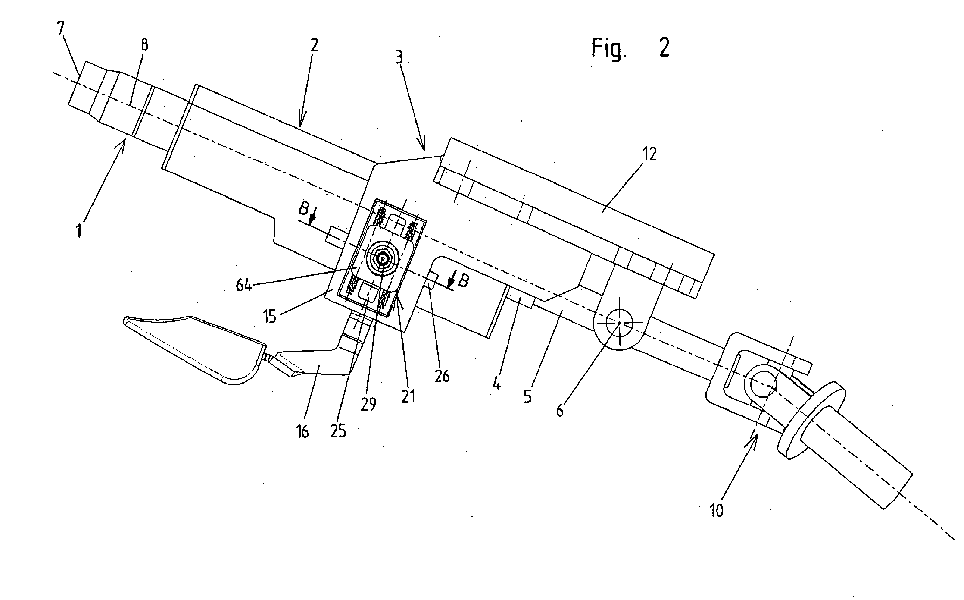

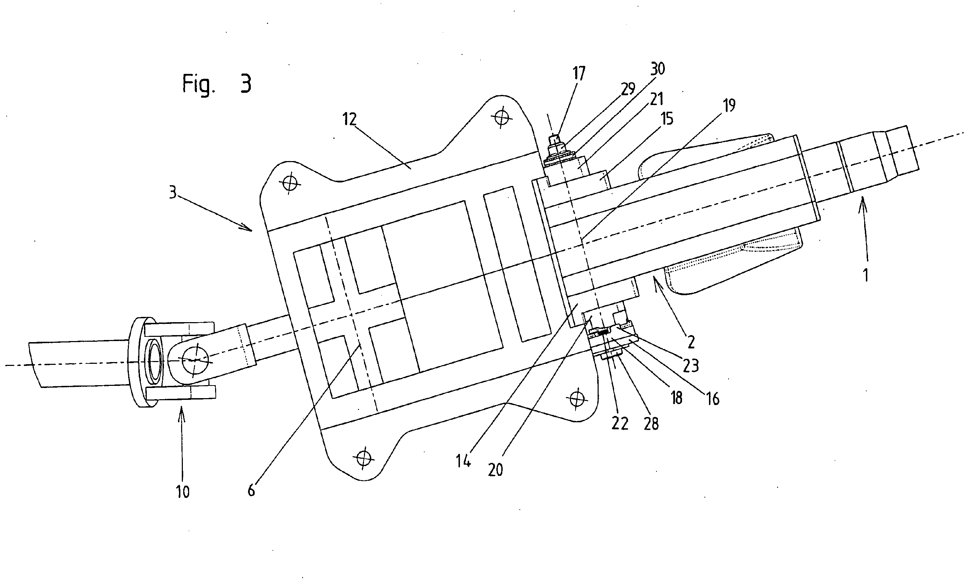

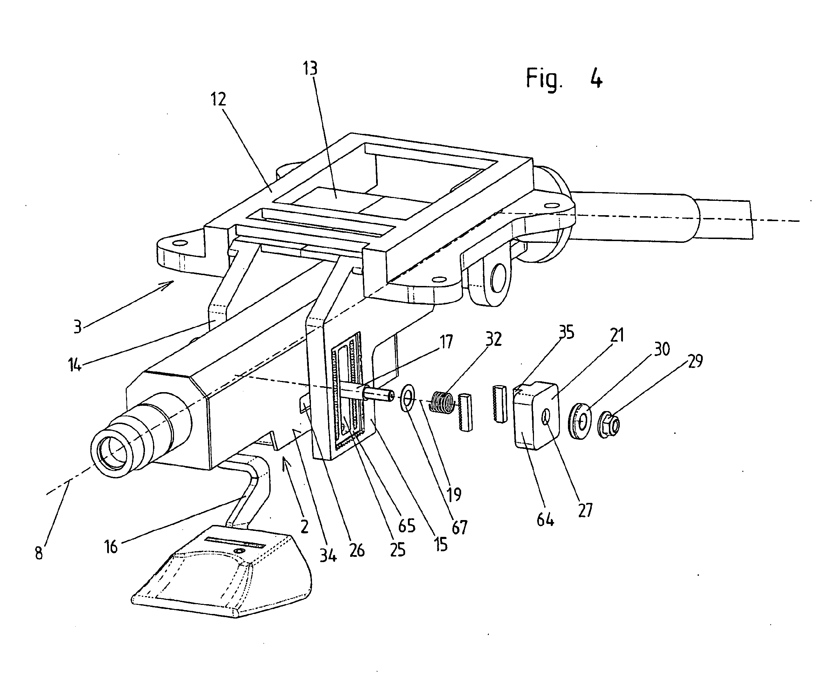

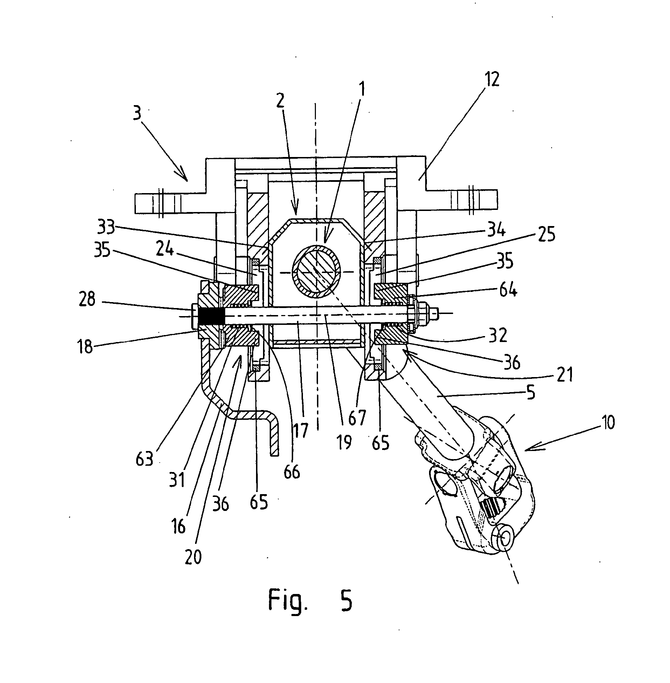

Im Ausführungsbeispiel gemäß den Fig. 1 bis 21 liegt zwischen den Zähnen 42 der ersten Verzahnung 38 und den Zähnen 43 der Verzahnung 39 in Verstellrichtung 46 kein Versatz vor, wie dies insbesondere aus den Schnitten entsprechend der Fig. 15, 18 und 21 ersichtlich ist. Das heißt, die Spitzen der Zähne 42 und 43 liegen bezüglich einer parallel zur Verstellrichtung 46 sich erstreckenden Achse an den gleichen Stellen, oder anders ausgedrückt es existiert für eine jeweilige Spitze eines Zahns 42 der ersten Verzahnung 38 eine sich zur Spitze eines Zahns 43 der zweiten Verzahnung 39 erstreckende Verbindungsgerade, die senkrecht zur Verstellrichtung 46 liegt.

Dagegen liegt zwischen den Zähnen 44 der ersten Gegenverzahnung 40 und den Zähnen 45 der zweiten Gegenverzahnung 41 in Verstellrichtung gesehen ein Versatz v vor, d. h. die Spitzen dieser Zähne liegen in Bezug auf eine parallel zur Verstellrichtung 46 sich erstreckende Achse nicht an den gleichen Stellen. Der Versatz v zwischen den Zähnen 44 der ersten Gegenverzahnung 40 und den Zähnen 45 der zweiten Gegenverzahnung 41 beträgt in diesem Ausführungsbeispiel gerade die Hälfte des Abstands zwischen zwei aufeinanderfolgenden Zähnen 44 bzw. 45. Man könnte auch sagen, die erste und die zweite Gegenverzahnung 40, 41 sind gegeneinander phasenverschoben, und zwar in diesem Ausführungsbeispiel um 90° phasenverschoben (entsprechend einem halben Zahn), während die Zähne 42, 43 der ersten und zweiten Verzahnung 38, 39 die gleiche Phasenlage aufweisen.

Dies hat zur Folge, dass die Zähne 42, 44 der ersten Verzahnung 38 und ersten Gegenverzahnung 40 nicht gleichzeitig mit den Zähnen 43, 45 der zweiten Verzahnung 39 und zweiten Gegenverzahnung eine Kopf-an-Kopf-Stellung einnehmen können, wie dies beispielsweise aus Fig. 21 ersichtlich ist. Die Spitzen der Zähne 43 der zweiten Verzahnung 39 liegen hier den Spitzen der Zähne 45 der zweiten Gegenverzahnung 41 genau gegenüber, während die Spitzen der Zähne 42, der ersten Verzahnung 38 den Tälern zwischen den Zähnen 44 der ersten Gegenverzahnung 40 gegenüberliegen. Wird die Spannvorrichtung bei dieser Verstellposition der Lenksäule geschlossen, so bleibt zwar die Kopf-an-Kopf-Stellung der Zähne 43 der zweiten Verzahnung 39 mit den Zähnen 45 der zweiten Gegenverzahnung 41 bestehen (rechts in Fig. 21), die Zähne 42 der ersten Verzahnung 38 gelangen aber mit den Zähnen 44 der ersten Gegenverzahnung 40 vollständig in Eingriff (rechte Seite in Fig. 21). Hierbei ist die Zahnleiste 37 gegenüber der Mittellage zwischen der ersten und zweiten Gegenverzahnung 40, 41 um eine Strecke s1 nach links verschoben. Diese Position der Zahnleiste 37 stellt sich beim Schließen der Spannvorrichtung automatisch ein, da zwischen dem Spannbolzen 17 und dem Gegenfeststellteil 14 und zwischen dem Spannbolzen 17 und dem Feststellteil 20 bzw. 21 ein insgesamt ausreichendes Spiel vorliegt.

Etwas andere Verstellpositionen der Lenksäule, in welchen die Spannvorrichtung geschlossen wurde, sind in den Fig. 13 bis 15 bzw. 16 bis 18 dargestellt. In den Fig. 13 bis 15 ist eine Mittellage zwischen Kopf-an-Kopf-Stellungen auf beiden Seiten ersichtlich, wobei die Zahnleiste 37 gegenüber der Mittellage zwischen den Gegenverzahnungen 40, 41 nicht versetzt ist, und in den Fig. 16 bis 18 ist eine Zwischenstellung zwischen den Stellungen der Fig. 19 bis 21 und 13 bis 15 dargestellt, wobei der seitliche Versatz der Zahnleiste 37 gegenüber der Mittelstellung zwischen den Gegenverzahnungen 40, 41 eine gegenüber Fig. 20 kleinere Strecke s2 (die Hälfte von s1) beträgt.

Es ist auf diese Weise eine stufenlose Verstellung und Feststellung der Lenkspindel in die den Verzahnungen 38, 39 und Gegenverzahnungen 40, 41 zugeordnete Verstellrichtung möglich.

Zwei etwas unterschiedliche Verstellpositionen der Lenkspindel 1 im geschlossenen Zustand der Spannvorrichtung gehen auch aus den Fig. 6 bis 9 hervor. Die ersten und zweiten Gegenverzahnungen 40, 41 sind bei diesem Ausführungsbeispiel der Erfindung an Einsatzteilen 65 des Gegenfeststellteils 15 (bzw. 14) angeordnet. Die Zahnlagen zwischen den Verzahnungen 38, 39 und Gegenverzahnungen 40, 41 sind bei diesem Ausführungsbeispiel auf beiden Seiten des Spannbolzens 17 (links und rechts des Spannbolzens in den Fig. 6 und 8) identisch.

Obwohl im gezeigten Ausführungsbeispiel auf beiden Seiten der Lenkspindel 1 jeweils ein Feststellteil 20, 21 und zugehöriges Gegenfeststellteil 14, 15 vorhanden ist, wäre es auch denkbar und möglich, nur ein Feststellteil 20 bzw. 21 mit zugehörigem Gegenfeststellteil 14 bzw. 15 auf einer Seite der Lenkspindel 1 vorzusehen. Weiters könnte die erfindungsgemäße Funktion prinzipiell auch nur mit einer am Feststellteil 20 bzw. 21 angeordneten Zahnleiste 37 erreicht werden, deren Verzahnungen 38, 39 mit Gegenverzahnungen 40, 41 im Gegenfeststellteil 14 bzw. 15 zusammenwirken. Auf der Seite des Feststellteils 20 bzw. 21, die dem Spannbolzen 17 gegenüberliegt, könnte in diesem Fall zur Abstützung zwischen dem Feststellteil 20 bzw. 21 und Gegenfeststellteil 14 bzw. 15 ein auf der Oberfläche des Gegenfeststellteils 14 bzw. 15 gleitender Gleitstein am Feststellteil 20 bzw. 21 angeordnet sein. Es wäre weiters denkbar und möglich, am Feststellteil 20 bzw. 21 die erste Verzahnung 38 und am Gegenfeststellteil 14 bzw. 15 die mit ihr zusammenwirkende erste Gegenverzahnung 40 auf einer Seite bezüglich des Spannbolzens 17 bzw. des Langlochs 24 bzw. 25 und die zweite Verzahnung 39 sowie die zugehörige zweite Gegenverzahnung 41 auf der anderen Seite bezüglich des Spannbolzens 17 bzw. des Langlochs 24 bzw. 25 anzuordnen.

Anstelle der über das Feststellteil 20 bzw. 21 vorstehenden Ausbildung der Verzahnungen 38, 39 und der gegenüber der Oberfläche des Gegenfeststellteils 14 bzw. 15 vertiefen Ausbildung der Gegenverzahnungen 40, 41 könnte dies auch umgekehrt werden, also beispielsweise die erste und zweite Gegenverzahnung 40, 41 als Pfeilverzahnung am Gegenfeststellteil 14 bzw. 15 auszubilden. Auch Mischungen hiervon wären prinzipiell denkbar und möglich.

Anstelle der beschriebenen Spannvorrichtung könnte diese auch in anderer Weise ausgebildet sein, solange Feststellteil 20, 21 und Gegenfeststellteil 14, 15 im geöffneten Zustand der Spannvorrichtung voneinander beabstandet sind und im geschlossenen Zustand der Spannvorrichtung miteinander verspannt werden. Unterschiedliche Spannvorrichtungen sind im Zusammenhang mit Lenksäulen bekannt geworden, die zu diesem Zweck einsetzbar wären.

Wie bereits erwähnt, ist die Erfindung nicht auf die Fixierung der Höhen- bzw. Neigungsverstellung der Lenksäule beschränkt, sondern statt dessen oder zusätzlich hierzu könnte die Erfindung auch im Zusammenhang mit der Fixierung der Längenverstellung einer Lenksäule eingesetzt werden.

Auch zur Fixierung der Höhen- bzw. Neigungsverstellung bei Lenksäulen, bei welchen die Schwenkachse 6 wesentlich näher beim Spannbolzen 17 liegt (sogenannte "Head-Tilt-Lenksäulen") kann die Erfindung in vorteilhafter Weise eingesetzt werden. Hierbei könnten die Zahnleisten 37 mit den Verzahnungen 38, 39 sowie die Gegenverzahnungen 40, 41 auch kreisbogenförmig gebogen (mit der Schwenkachse 6) als Mittelpunkt ausgebildet sein.

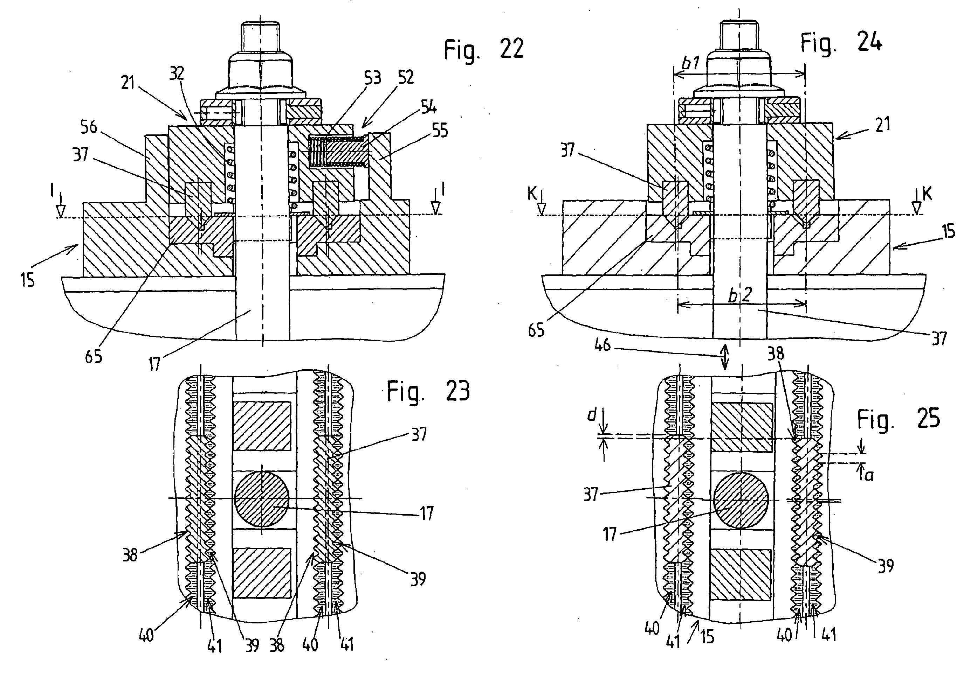

Bei der in den Fig. 22 und 23 dargestellten Ausführungsvariante der Erfindung wirkt zwischen dem Feststellteil 20 bzw. 21 und dem Gegenfeststellteil 14, 15 eine Federeinrichtung 52. Diese Federeinrichtung 52 wird von einer in einer Vertiefung des Feststellteils 20, 21 angeordneten Feder 53 gebildet, die einen Gleitbolzen 54 trägt, der sich gegen einen das Feststellteil 20, 21 übergreifenden, mit einer geringen Oberflächenreibung ausgebildeten Fortsatz 55 des Gegenfeststellteils 14, 15 abstützt. Auf der gegenüberliegenden Seite des Feststellteils 20, 21 ist ein weiterer das Feststellteil 20, 21 übergreifender Führungsfortsatz 56 angeordnet, an welchem das Feststellteil 20, 21 beim Verstellen gleitet und auch beim Öffnen und Schließen der Spannvorrichtung gleitet. Es soll dadurch unabhängig von der vor dem Schließen der Spannvorrichtung vorliegenden Verstellposition eine geklemmte Stellung erreicht werden, bei der die Verzahnungen auf der einen Seite vollständig mit den Gegenverzahnungen in Eingriff sind, wie dies in Fig. 23 dargestellt ist.

Eine weitere Ausführungsvariante der Erfindung ist in den Fig. 24 und 25 dargestellt. Hier sind die Verzahnungen 38, 39 und Gegenverzahnungen 40, 41 auf beiden Seiten des Spannbolzens 17 identisch ausgebildet. Die erste Verzahnung 38 und zweite Verzahnung 39 auf der einen Seite (links in Fig. 24) bezüglich dem Spannbolzen 17 sind aber gegenüber der ersten Verzahnung 38 und zweiten Verzahnung 39 auf der anderen Seite (rechts in Fig. 24) bezüglich dem Spannbolzen in Verstellrichtung 46 um einen Betrag d versetzt, der einen Teil des Abstands a zwischen aufeinanderfolgenden Zähnen entspricht, z. B. dem halben Abstand zwischen aufeinanderfolgenden Zähnen entspricht. Im gezeigten Ausführungsbeispiel gemäß den Fig. 24 und 25 ist dies beispielsweise dadurch erreicht, dass die beiden Zahnleisten 37 um den Betrag d in Verstellrichtung 46 zueinander verschoben sind. Weiters ist der Abstand b1 zwischen den Mittelebenen zwischen den ersten und zweiten Verzahnungen 38, 39 gegenüber dem Abstand b2 zwischen den Mittelebenen zwischen den ersten und zweiten Gegenverzahnungen 40, 41 unterschiedlich. Auf diese Weise wird erreicht, dass eine Kopf-an-Kopf-Stellung von einer der beiden Verzahnungen 38, 39 mit einer der beiden Gegenverzahnungen 40, 41 immer nur auf einer Seite des Spannbolzens 17 gleichzeitig vorliegen kann, wodurch die Sicherheit der Fixierung der Verstellung nochmals erhöht wird (ein Zick-Zack-förmiges Verrutschen zwischen den Zahnleisten 37 und den Gegenverzahnungen 40, 41 wird blockiert). Anstelle des Versatzes der Verzahnungen 38, 39 könnten auch die Gegenverzahnungen 40, 41 versetzt sein (oder zusätzlich hierzu).

Die Fig. 26. bis 31 zeigen ein Ausführungsbeispiel der Erfindung, bei welchem eine jeweilige Zahnleiste 37 sowohl in Schließrichtung 57 als auch in Richtung 58 senkrecht zur Verstellrichtung 46 und Schließrichtung 57 verschiebbar gegenüber dem Feststellteil 20 gelagert ist. Hierbei weist der Grundkörper 63 eine hinterschnittene Nut 59 auf, in welche die mit Spiel gegenüber der hinterschnittenen Nut 59 gelagerte ("schwimmend gelagerte") Zahnleiste 37 ragt, wobei an der Zahnleiste 37 seitliche Anschlag-Fortsätze 60, 61 angebracht sind, die in die hinterschnittenen Bereiche der Nut 59 ragen. Eine Federeinrichtung 62 spannt die Zahnleiste 37 in die vollständig ausgefahrene Position vor, in welcher die Anschlag-Fortsätze 60, 61 an den Hinterschneidungsflanken der Nut 59 anliegen. Beim Schließen der Spannvorrichtung wird die Zahnleiste 37 gegen die Kraft der Feder 62 mit ihren Anschlag-Fortsätzen 60, 61 an den Nutgrund angedrückt und kann sich hierbei in Anpassung an die Gegenverzahnungen 40, 41 in Richtung 58 verschieben. Ein Beispiel für einen vollständig geschlossenen Zustand ist in den Fig. 29 bis 31 dargestellt. Durch diese Ausbildung des Feststellteils 20 ist es für die beim Schließen der Spannvorrichtung in Abhängigkeit von der Verstellposition erforderliche Verschiebung zwischen den Verzahnungen 38, 39 und den Gegenverzahnungen 40, 41 in Richtung 58 nicht notwendig, dass ein entsprechend großes Spiel zwischen dem Feststellteil 20 und dem Spannbolzen 17 und/oder zwischen dem Spannbolzen 17 und dem Gegenfeststellteil 14 vorliegt.

Denkbar und möglich wäre es auch, dass die Zahnleiste 37 gegenüber dem Grundkörper um eine parallel zur Verstellrichtung 46 liegende Achse verschwenkbar gelagert ist, um beim Schließen der Spannvorrichtung eine Verstellung der Verzahnungen 38, 39 in Richtung 58 (Fig. 27) zu ermöglichen. Auch könnten die Verzahnungen 38, 39 bzw. die Zahnleisten 37 und die Gegenverzahnungen 40, 41 gebogen ausgebildet sein.

Die Fig. 32 bis 37 schließlich zeigen ein Ausführungsbeispiel, bei welchem der Versatz v in Verstellrichtung 46 zwischen den Zähnen nicht zwischen der ersten und zweiten Gegenverzahnung 40, 41 sondern zwischen der ersten und zweiten Verzahnung 38, 39 vorliegt.

Ein weiteres Ausführungsbeispiel der Erfindung ist in den Fig. 38 bis 40 dargestellt. Es ist hier eine Zahnleiste 37 vorgesehen, die eine Durchtrittsöffnung 68 zum Durchtritt des Spannbolzens 17 aufweist, die hier als Langlochausnehmung ausgebildet ist, um eine Verstellung der Zahnleiste 37 in Richtung 58 senkrecht zur Schließrichtung 57 und zur Verstellrichtung 46 zu ermöglichen. Die Zahnleiste ist wie beim Ausführungsbeispiel gemäß den Fig. 26 bis 31 in einer hinterschnittenen Nut 59 des Feststellteils 21 "schwimmend" gelagert, d. h. sie weist ein Spiel in Richtung 58 auf. Sie ist weiters parallel zur Schließrichtung 57 gegenüber dem Grundköprer 64 des Feststellteils 21 verschiebbar. Eine Federeinrichtung 62 spannt die Zahnleiste 37 nach außen vor und im geöffneten Zustand der Spannvorrichtung liegen die Anschlag-Fortsätze 60, 61 an den Hinterschneidungsflanken an (Fig. 39).

An der Zahnleiste 37 sind wiederum erste und zweite Verzahnungen 38, 39 angeordnet, die in diesem Ausführungsbeispiel auf bezüglich dem Spannbolzen 17 gegenüberliegenden Seiten der Zahnleiste 37 angeordnet sind (links und rechts des Spannbolzens 17 in den Fig. 38 bis 40). Die Verzahnungen 38, 39 wirken wiederum in der bereits zuvor beschriebenen Weise mit Gegenverzahnungen 40, 41 zusammen, die am Gegenfeststellteil 15 angeordnet sind, und zwar hier an einem Einsatzteil 65 desselben. Die Gegenverzahnungen 40, 41 liegen entsprechend den Verzahnungen 38, 39 auf bezüglich dem Spannbolzen 17 gegenüberliegenden Seiten des Gegenfeststellteils 15.

Zur Führung des Feststellteils 21 gegenüber dem Gegenfeststellteil 15 weist dieses Führungsfortsätze 56 auf, zwischen denen das Feststellteil 21 liegt und die das Feststellteil in Verstellrichtung 46 verschiebbar führen. Zur Beabstandung des Feststellteils 21 vom Gegenfeststellteil 15 sind Federeinrichtungen 69 vorhanden, welche jeweils von einer Feder, die sich am Feststellteil 21 abstützt und einem Gleitbolzen, der sich am Gegenfeststellteil 15 (an der Oberfläche des Einsatzteiles 65) abstützt, gebildet.

Dieses Ausführungsbeispiel gemäß den Fig. 38 bis 40 könnte beispielsweise dahingehend modifiziert werden, dass die Zahnleiste 37 starr mit dem Feststellteile 21 verbunden ist, wobei das Feststellteil 21 gegenüber dem Gegenfeststellteil 15 ein ausreichendes Spiel in der Richtung 58 aufweist, um eine Einstellung der Zahnleiste 37 gegenüber dem Gegenfeststellteil 15 in diese Richtung zu ermöglichen.

Die Feststellteile 20, 21 könnten beispielsweise spanabhebend oder als Sinterteile oder aus geprägtem Stahlblech durch ein Tiefziehverfahren spanlos geformt sein. Das gleiche gilt für die Gegenfeststellteile bzw. die darin angeordneten, die Gegenverzahnungen aufweisenden Einsatzteile. Die Einsatzteile 65 können auch entfallen und die Gegenfeststellteile könnten einstückig ausgebildet sein.

Unterschiedliche weitere Modifikationen der beschriebenen Ausführungsbeispiele der Erfindung sind denkbar und möglich, ohne den Bereich der Erfindung, wie sie in den folgenden Ausprüchen offenbart wird, zu verlassen.

### Legende zu den Hinweisziffern:

- 1: Lenkspindel
- 2: Mantelrohr
- 3: Konsolenteil
- 4: Abschnitt
- 5: Abschnitt
- 6: Schwenkachse
- 7: vorderes Ende
- 8: Längsachse
- 9: Lasche
- 10: Kardangelenk
- 11: Abschnitt
- 12: Montageteile
- 13: Trägerplatte
- 14: Gegenfeststellteil
- 15: Gegenfeststellteil
- 16: Spannhebel
- 17: Spannbolzen
- 18: Nockenscheibe
- 19: Achse
- 20: Feststelltteil
- 21: Feststellteil
- 22: Schrägfläche
- 23: Nocken
- 24: Langloch
- 25: Langloch
- 26: Langloch
- 27: Bohrung
- 28: Kopf
- 29: Mutter
- 30: Achsiallager
- 31: Feder
- 32: Feder
- 33: Seitenfläche
- 34: Seitenfläche
- 35: Nase
- 36: Nase
- 37: Zahnleiste
- 38: erste Verzahnung
- 39: zweite Verzahnung
- 40: erste Gegenverzahnung
- 41: zweite Gegenverzahnung
- 42: Zahn
- 43: Zahn
- 44: Zahn
- 45: Zahn
- 46: Verstellrichtung
- 47: Ebene
- 48: Ebene
- 49: Ebene
- 50: Ebene
- 51: Winkel
- 52: Federeinrichtung
- 53: Feder
- 54: Gleitbolzen
- 55: Fortsatz
- 56: Führungsfortsatz
- 57: Schließrichtung
- 58: Richtung
- 59: Nut
- 60: Anschlag-Fortsatz
- 61: Anschlag-Fortsatz
- 62: Federeinrichtung
- 63: Grundkörper
- 64: Grundkörper
- 65: Einsatzteil
- 65: Einsatzteil
- 66: Gleitscheibe
- 67: Gleitscheibe
- 68: Durchtrittsöffnung
- 69: Federeinrichtung

## Patentansprüche

1. Feststelleinrichtung einer in mindestens eine Verstellrichtung (46) verstellbaren Lenksäule, mit mindestens einem der Verstellrichtung (46) oder einer der Verstellrichtungen zugeordneten Feststellteil (20, 21), welches zumindest eine erste und zumindest eine zweite Verzahnung (38, 39) aufweist, und mindestens einem dieser Verstellrichtung (46) zugeordneten Gegenfeststellteil (14, 15), welches zumindest eine erste und zumindest eine zweite Gegenverzahnung (40, 41) aufweist, und mit einer öffen- und schließbaren Spannvorrichtung, in deren geöffnetem Zustand die ersten und zweiten Verzahnungen (38, 39) von den ersten und zweiten Gegenverzahnungen (40, 41) beabstandet sind und in deren geschlossenem Zustand das Feststellteil (20, 21) und das Gegenfeststellteil (14, 15) miteinander in Zahneingriff stehen, wobei sich die Zähne der Verzahnungen (38, 39) und der Gegenverzahnungen (40, 41) quer zu dieser Verstellrichtung (46) erstrecken und aufeinanderfolgende Zähne (42 bis 45) der Verzahnungen (38, 39) und Gegenverzahnungen (40, 41) jeweils gleiche Abstände voneinander aufweisen und die Spitzen der Zähne (42 bis 45) der Verzahnungen (38, 39) und Gegenverzahnungen (40, 41) jeweils in Ebenen (47 bis 50) liegen, **dadurch gekennzeichnet, dass** die Ebene (47) der Spitzen der Zähne (42) der ersten Verzahnung (38) und die Ebene (48) der Spitzen der Zähne (43) der zweiten Verzahnung (39) V-förmig zueinander stehen und hierbei einen Winkel (51) miteinander einschließen und die Ebene (49) der Spitzen der Zähne (44) der ersten Gegenverzahnung (40) und die Ebene (50) der Spitzen der Zähne (45) der zweiten Gegenverzahnung (41) V-förmig zueinander stehen und den gleichen Winkel (51) miteinander einschließen und dass zwischen den Zähnen (42) der ersten Verzahnung (38) und den Zähnen (43) der zweiten Verzahnung (39) oder zwischen den Zähnen (44) der ersten Gegenverzahnung (40) und den Zähnen (45) der zweiten Gegenverzahnung (41) in Verstellrichtung (46) ein Versatz (v) vorliegt, der einen Teil des Abstands (a) zwischen aufeinanderfolgenden Zähnen (42 bis 45) beträgt.

2. Feststelleinrichtung nach Anspruch 1, **dadurch gekennzeichnet, dass** der Versatz (v) die Hälfte des Abstands (a) zwischen aufeinanderfolgenden Zähnen (42 bis 45) beträgt.

3. Feststelleinrichtung nach Anspruch 1 oder Anspruch 2, **dadurch gekennzeichnet, dass** die ersten und zweiten Verzahnungen (38, 39) an einer Zahnleiste (37) angeordnet sind, welche an oder in einem Grundkörper (63, 64) des Feststellteils (20, 21) angeordnet ist.

4. Feststelleinrichtung nach Anspruch 3, **dadurch gekennzeichnet, dass** die Zahnleiste (37) starr mit dem Grundkörper (63, 64) des Feststellteils (20, 21) verbunden oder einstückig mit diesem ausgebildet ist.

5. Feststelleinrichtung nach Anspruch 3, **dadurch gekennzeichnet, dass** die Zahnleiste (37) in eine Richtung (58) begrenzt verschiebbar gegenüber dem Grundkörper (63, 64) des Feststellteils (20, 21) gelagert ist, welche senkrecht zur Verstellrichtung (46) und senkrecht zu einer Schließrichtung (57) steht, in welche sich das Feststellteil (20, 21) und das Gegenfeststellteil (14, 15) beim Schließen der Spannvorrichtung aufeinander zu bewegen.

6. Feststelleinrichtung nach Anspruch 5, **dadurch gekennzeichnet, dass** die Zahnleiste (37) gegen die Kraft einer Federeinrichtung (62) in bzw. gegen die Schließrichtung (57) begrenzt verschiebbar gegenüber dem Grundkörper (63, 64) des Feststellteils (20, 21) gelagert ist.

7. Feststelleinrichtung nach einem der Ansprüche 1 bis 6, **dadurch gekennzeichnet, dass** die erste Gegenverzahnung und zweite Gegenverzahnung (40, 41) in einer im Querschnitt gesehen im Wesentlichen V-förmigen Vertiefung im Gegenfeststellteil (14, 15) angeordnet sind.

8. Feststelleinrichtung nach einem der Ansprüche 1 bis 7, **dadurch gekennzeichnet, dass** zwischen dem Feststellteil (20, 21) und dem Gegenfeststellteil (14, 15) eine Federeinrichtung (52) wirkt, welche das Feststellteil (20, 21) gegenüber dem Gegenfeststellteil (14, 15) in Richtung senkrecht zur Verstellrichtung (46) und senkrecht zur Schließrichtung (57) beaufschlagt und gegen einen Führungsfortsatz (56) des Gegenfeststellteils (14, 15) andrückt.

9. Feststelleinrichtung nach einem der Ansprüche 1 bis 8, **dadurch gekennzeichnet, dass** das Feststellteil (20, 21) von einem Spannbolzen (17) der Spannvorrichtung durch eine Bohrung (27) durchsetzt wird und vom Spannbolzen (17) beim Schließen der Spannvorrichtung in achsialer Richtung des Spannbolzens (17) gegen das Gegenfeststellteil (14, 15) verschoben wird.

10. Feststelleinrichtung nach einem der Ansprüche 1 bis 9, **dadurch gekennzeichnet, dass** die Verstellrichtung (46) die Richtung der Höhen- bzw. Neigungsverstellung der Lenkspindel (1) der Lenksäule ist.

11. Feststelleinrichtung nach Anspruch 10, **dadurch gekennzeichnet, dass** das Gegenfeststellteil (14, 15) von einer seitlich eines Mantelrohrs (2), welches die Lenkspindel (1) der Lenksäule zumindest abschnittsweise aufnimmt, sich erstreckenden Seitenwange eines chassisfesten Konsolenteils (3) gebildet wird und ein vom Spannbolzen (17) der Spannvorrichtung durchsetztes Langloch (24, 25) aufweist.

12. Feststelleinrichtung nach einem der Ansprüche 1 bis 11, **dadurch gekennzeichnet, dass** zwei Feststellteile (20, 21) und zwei mit diesen im geschlossenen Zustand der Feststelleinrichtung in Eingriff stehende Gegenfeststellteile (14, 15) mit jeweiligen ersten und zweiten Verzahnungen (38, 39) bzw. ersten und zweiten Gegenverzahnungen (40, 41) vorhanden sind.

13. Feststelleinrichtung nach einem der Ansprüche 1 bis 12, **dadurch gekennzeichnet, dass** das Feststellteil (20, 21) zwei erste und zwei zweite Verzahnungen (38, 39) aufweist, und das Gegenfeststellteil (14, 15) zwei erste und zwei zweite mit den Verzahnungen (38, 39) des Feststellteils (20, 21) im geschlossenen Zustand der Spannvorrichtung in Eingriff stehende Gegenverzahnungen (40, 41) aufweist.

14. Feststelleinrichtung nach Anspruch 13, **dadurch gekennzeichnet, dass** am Feststellteil (20, 21) zwei Zahnleisten (37) angeordnet sind, welche beidseitig des Spannbolzens (17) liegen und jeweils eine erste und eine zweite Verzahnung (38, 39) aufweisen.

15. Feststelleinrichtung nach Anspruch 13 oder Anspruch 14, **dadurch gekennzeichnet, dass** die beiden ersten Verzahnungen (38) und die beiden zweiten Verzahnungen (39) in Verstellrichtung (46) um eine Strecke (d) gegeneinander versetzt sind, die einen Teil des Abstands (a) zwischen aufeinanderfolgenden Zähnen (42, 43) beträgt.

16. Feststelleinrichtung nach einem der Ansprüche 13 bis 15, **dadurch gekennzeichnet, dass** die beiden ersten Gegenverzahnungen (40) und die beiden zweiten Gegenverzahnungen (41) in Verstellrichtung (46) um eine Strecke gegeneinander versetzt sind, die einen Teil des Abstands (a) zwischen aufeinanderfolgenden Zähnen (44, 45) beträgt.

17. Feststelleinrichtung nach Anspruch 15 oder Anspruch 16, **dadurch gekennzeichnet, dass** der Abstand (b1) zwischen den Mittelebenen zwischen den ersten und zweiten Verzahnungen (38, 39) sich vom Abstand (b2) zwischen den Mittelebenen zwischen den ersten und zweiten Gegenverzahnungen (40, 41) unterscheidet.

18. Feststelleinrichtung nach einem der Ansprüche 3 bis 12, **dadurch gekennzeichnet, dass** die Zahnleiste (37) eine Durchtrittsöffnung (68) zum Durchtritt des Spannbolzens (17) aufweist und die erste Verzahnung (38) und die zweite Verzahnung (39) sich auf bezüglich des Spannbolzens (17) gegenüberliegenden Seiten der Zahnleiste (37) befinden und dass die zugehörigen Gegenverzahnungen (40, 41) des Gegenfeststellteils (15) sich entsprechend auf bezüglich des Spannbolzens (17) gegenüberliegenden Seiten des Gegenfeststellteils (15) befinden.

19. Feststelleinrichtung nach Anspruch 18, **dadurch gekennzeichnet, dass** der Spannbolzen (17) die Durchtrittsöffnung (68) mit Spiel in Richtung (58), die senkrecht zur Schließrichtung (57) und zur Verstellrichtung (46) steht, durchsetzt.

20. Feststelleinrichtung nach einem der Ansprüche 1 bis 19, **dadurch gekennzeichnet, dass** das Feststellteil (20, 21) oder das Gegenfeststellteil (14, 15) bei einer Verstellung der Lenkspindel (1) der Lenksäule in die Verstellrichtung (46) mit der Lenkspindel (1) mitbewegt und das andere dieser beiden Teile in diese Verstellrichtung (46) unverschiebbar gegenüber einem chassisfesten Konsolenteil (3) ist, welche die Lenkspindel (1) bzw. ein die Lenkspindel (1) lagerndes Mantelrohr (2) trägt.

21. Feststelleinrichtung nach einem der Ansprüche 1 bis 20, **dadurch gekennzeichnet, dass** im geöffneten Zustand der Spannvorrichtung eine Federeinrichtung (31, 32, 69) das Feststellteil (20, 21) gegenüber dem Gegenfeststellteil (14, 15) beabstandet und die Verzahnungen (38, 39) außer Eingriff mit den Gegenverzahnungen (40, 41) sind.

## Claims

1. A locking device of a steering column which is adjustable in at least one adjustment direction (46), comprising at least one locking part (20, 21), associated with the adjustment direction (46) or one of the adjustment directions, which locking part has at least one first and at least one second toothing (38, 39), and at least one counterlocking part (14, 15), associated with this adjustment direction (46), which counterlocking part has at least one first and at least one second countertoothing (40, 41), and an openable and closable clamping device, in whose opened state the first and second toothings (38, 39) are spaced from the first and second countertoothings (40, 41), and in whose closed state the locking part (20, 21) and the counterlocking part (14, 15) are in meshing engagement with one another, the teeth of the toothings (38, 39) and of the countertoothings (40, 41) extending transversely to this adjustment direction (46) and successive teeth (42 to 45) of the toothings (38, 39) and countertoothings (40, 41) each being equidistantly spaced from one another and the tips of the teeth (42 to 45) of the toothings (38, 39) and countertoothings (40, 41) each lying in planes (47 to 50), **characterised in that** the plane (47) of the tips of the teeth (42) of the first toothing (38) and the plane (48) of the tips of the teeth (43) of the second toothing (39) are in a V-shape relationship to one another and thereby form an angle (51) with one another, and the plane (49) of the tips of the teeth (44) of the first countertoothing (40) and the plane (50) of the tips of the teeth (45) of the second countertoothing (41) are in a V-shape relationship to one another and form the same angle (51) with one another, and **in that** between the teeth (42) of the first toothing (38) and the teeth (43) of the second toothing (39) or between the teeth (44) of the first countertoothing (40) and the teeth (45) of the second countertoothing (41) an offset (v) is present in the adjustment direction (46) which is a proportion of the spacing (a) between successive teeth (42 to 45).

2. A locking device according to Claim 1, **characterised in that** the offset (v) is half the spacing (a) between successive teeth (42 to 45).

3. A locking device according to Claim 1 or Claim 2, **characterised in that** the first and second toothings (38, 39) are disposed on a tooth bar (37) which is disposed on or in a base body (63, 64) of the locking part (20, 21).

4. A locking device according to Claim 3, **characterised in that** the tooth bar (37) is rigidly connected to the base body (63, 64) of the locking part (20, 21) or is designed as one piece therewith.

5. A locking device according to Claim 3, **characterised in that** the tooth bar (37) is mounted so as to be displaceable to a limited extent relative to the base body (63, 64) of the locking part (20, 21) in a direction (58) which is perpendicular to the adjustment direction (46) and perpendicular to a closing direction (57) in which the locking part (20, 21) and the counterlocking part (14, 15) move towards one another during the closing of the clamping device.

6. A locking device according to Claim 5, **characterised in that** the tooth bar (37) is mounted so as to be displaceable to a limited extent relative to the base body (63, 64) of the locking part (20, 21) against the force of a spring arrangement (62) in or counter to the closing direction (57).

7. A locking device according to one of Claims 1 to 6, **characterised in that** the first countertoothing and the second countertoothing (40, 41) are disposed in a substantially V-shaped depression, viewed in cross-section, in the counterlocking part (14, 15).

8. A locking device according to one of Claims 1 to 7, **characterised in that** between the locking part (20, 21) and the counterlocking part (14, 15) there acts a spring arrangement (52) which acts upon the locking part (20, 21) relative to the counterlocking part (14, 15) in the direction perpendicular to the adjustment direction (46) and perpendicular to the closing direction (57) and presses it against a guide extension (56) of the counterlocking part (14, 15).

9. A locking device according to one of Claims 1 to 8, **characterised in that** the locking part (20, 21) is penetrated by a clamping bolt (17) of the clamping device through a bore (27) and is displaced by the clamping bolt (17) in the axial direction of the clamping bolt (17) against the counterlocking part (14, 15) during the closing of the clamping device.

10. A locking device according to one of Claims 1 to 9, **characterised in that** the adjustment direction (46) is the direction of the height or inclination adjustment of the steering spindle (1) of the steering column.

11. A locking device according to Claim 10, **characterised in that** the counterlocking part (14, 15) is formed by a side flank of a bracket part (3) fixed to the chassis, which side flank extends laterally of a casing tube (2) that accommodates at least a portion of the steering spindle (1) of the steering column, and has an elongated hole (24, 25) penetrated by the clamping bolt (17) of the clamping device.

12. A locking device according to one of Claims 1 to 11, **characterised in that** two locking parts (20, 21) and two counterlocking parts (14, 15) in engagement therewith in the closed state of the locking device are provided, comprising, respectively, first and second toothings (38, 39) or first and second countertoothings (40, 41).

13. A locking device according to one of Claims 1 to 12, **characterised in that** the locking part (20, 21) has two first and two second toothings (38, 39), and the counterlocking part (14, 15) has two first and two second countertoothings (40, 41) in engagement with the toothings (38, 39) of the locking part (20, 21) in the closed state of the clamping device.

14. A locking device according to Claim 13, **characterised in that** there are disposed on the locking part (20, 21) two tooth bars (37) which lie on both sides of the clamping bolt (17) and which each have a first and a second toothing (38, 39).

15. A locking device according to Claim 13 or Claim 14, **characterised in that** the two first toothings (38) and the two second toothings (39) are offset relative to one another in the adjustment direction (46) by a distance (d) which is a proportion of the spacing (a) between successive teeth (42, 43).

16. A locking device according to one of Claims 13 to 15, **characterised in that** the two first countertoothings (40) and the two second countertoothings (41) are offset relative to one another in the adjustment direction (46) by a distance which is a proportion of the spacing (a) between successive teeth (44, 45).

17. A locking device according to Claim 15 or Claim 16, **characterised in that** the spacing (b1) between the centre planes between the first and second toothings (38, 39) differs from the spacing (b2) between the centre planes between the first and second countertoothings (40, 41).

18. A locking device according to one of Claims 3 to 12, **characterised in that** the tooth bar (37) has a passage opening (68) for the passage therethrough of the clamping bolt (17) and the first toothing (38) and the second toothing (39) are located on opposite sides of the tooth bar (37) with respect to the clamping bolt (17), and **in that** the associated countertoothings (40, 41) of the counterlocking part (15) are correspondingly located on opposite sides of the counterlocking part (15) with respect to the clamping bolt (17).

19. A locking device according to Claim 18, **characterised in that** the clamping bolt (17) passes with clearance through the passage opening (68) in the direction (58) which is perpendicular to the closing direction (57) and to the adjustment direction (46).

20. A locking device according to one of Claims 1 to 19, **characterised in that** the locking part (20, 21) or the counterlocking part (14, 15) during adjustment of the steering spindle (1) of the steering column in the adjustment direction (46) moves jointly with the steering spindle (1), and the other of these two parts is non-displaceable in this adjustment direction (46) relative to a bracket part (3) fixed to the chassis which bears the steering spindle (1) or a casing tube (2) supporting the steering spindle (1).

21. A locking device according to one of Claims 1 to 20, **characterised in that**, in the opened state of the clamping device, a spring arrangement (31, 32, 69) spaces the locking part (20, 21) relative to the counterlocking part (14, 15) and the toothings (38, 39) are disengaged from the countertoothings (40, 41).

## Revendications

1. Dispositif de blocage d'une colonne de direction réglable dans au moins un sens de réglage (46), comprenant
- au moins un élément de blocage (20, 21) associé au sens de réglage (46) ou à un des sens de blocage, et présentant au moins une première et au moins une deuxième denture (38, 39), et
- au moins un élément de blocage antagoniste (14, 15) associé à ce sens de réglage (46), et présentant au moins une première et au moins une deuxième denture antagonistes (40, 41), et
- un dispositif de serrage pouvant être ouvert et fermé, dont l'état ouvert tient les première et deuxième dentures (38, 39) écartées des première et deuxième dentures antagonistes (40, 41), et dont l'état fermé engrène l'élément de blocage (20, 21) et l'élément de blocage antagoniste (14, 15) l'un dans l'autre,
- les dents des dentures (38, 39) et des dentures antagonistes (40, 41) étant transversales à ce sens de réglage (46) avec des dents successives (42 à 45) des dentures (38, 39) et des dentures antagonistes (40, 41) présentant respectivement les mêmes distances les unes des autres, alors que les pointes des dents (42 à 45) des dentures (38, 39) et des dentures antagonistes (40, 41) se situent respectivement dans des plans (47 à 50),
**caractérisé en ce que**
le plan (47) des pointes des dents (42) de la première denture (38) et le plan (48) des pointes des dents (43) de la deuxième denture (39) sont disposés en forme de V les uns par rapport aux autres en enfermant un angle (51), et le plan (49) des pointes des dents (44) de la première denture antagoniste (40) et le plan (50) des pointes des dents (45) de la deuxième denture antagoniste (41) sont disposés en forme de V les uns par rapport aux autres en enfermant le même angle (51), et un décalage (v) correspondant à une partie de la distance (a) entre des dents successives (42 à 45) est présent entre les dents (42) de la première denture (38) et les dents (43) de la deuxième denture (39) ou entre les dents (44) de la première denture antagoniste (40) et les dents (45) de la deuxième denture antagoniste (41).

2. Dispositif de blocage selon la revendication 1,
**caractérisé en ce que**
le décalage (v) correspond à la moitié de la distance (a) entre des dents successives (42 à 45).

3. Dispositif de blocage selon la revendication 1 ou 2,
**caractérisé en ce que**
les première et deuxième dentures (38, 39) sont sur un rail denté (37) prévu sur ou dans un corps de base (63, 64) de l'élément de blocage (20, 21).

4. Dispositif de blocage selon la revendication 3,
**caractérisé en ce que**
le rail denté (37) est relié rigidement ou formé d'une seule pièce avec le corps de base (63, 64) de l'élément de blocage (20, 21).

5. Dispositif de blocage selon la revendication 3,
**caractérisé en ce que**
le rail denté (37) est logé en déplacement limité par rapport au corps de base (63, 64) de l'élément de blocage (20, 21) dans un sens (58) perpendiculaire au sens de réglage (46) et perpendiculairement à un sens de fermeture (57) dans lequel l'élément de blocage (20, 21) et l'élément de blocage antagoniste (14, 15) s'approchent l'un de l'autre lors de la fermeture du dispositif de serrage.

6. Dispositif de blocage selon la revendication 5,
**caractérisé en ce que**
le rail denté (37) est logé en déplacement limité par rapport au corps de base (63, 64) de l'élément de blocage (20, 21) à l'encontre de la force d'un dispositif de ressort (62) dans le sens de fermeture (57) ou à l'opposé de celui-ci.

7. Dispositif de blocage selon l'une quelconque des revendications 1 à 6,
**caractérisé en ce que**
la première et la deuxième dentures antagonistes (40, 41) sont disposées dans l'élément de blocage antagoniste (14, 15) dans un creux pour l'essentiel en forme de V, observé en coupe transversale.

8. Dispositif de blocage selon l'une quelconque des revendications 1 à 7,
**caractérisé en ce qu'**
entre l'élément de blocage (20, 21) et l'élément de blocage antagoniste (14, 15) agit un dispositif de ressort (52) qui charge l'élément de blocage (20, 21) par rapport à l'élément de blocage antagoniste (14, 15) dans le sens perpendiculaire au sens de réglage (46) et perpendiculaire au sens de fermeture (57), et qui l'applique contre un appendice de guidage (56) de l'élément de blocage antagoniste (14, 15).

9. Dispositif de blocage selon l'une quelconque des revendications 1 à 8,
**caractérisé en ce que**
l'élément de blocage (20, 21) est traversé par un boulon de serrage (17) du dispositif de serrage à travers un alésage (27) et déplacé par le boulon de serrage (17), lors de la fermeture du dispositif de serrage, dans le sens axial du boulon de serrage (17) contre l'élément de blocage antagoniste (14, 15).

10. Dispositif de blocage selon l'une quelconque des revendications 1
à 9,
**caractérisé en ce que**
le sens de réglage (46) est le sens de réglage de la hauteur ou de l'inclinaison de l'arbre de direction (1) de la colonne de direction.

11. Dispositif de blocage selon la revendication 10,
**caractérisé en ce que**
l'élément de blocage antagoniste (14, 15) est formé par une joue latérale d'un élément de console (3) solidaire du châssis s'étendant à côté d'un tube enveloppe (2), qui reçoit au moins en partie l'arbre de direction (1) de la colonne de direction, et présente un trou oblong (24, 25) traversé par le boulon de serrage (17) du dispositif de serrage.

12. Dispositif de blocage selon l'une quelconque des revendications 1 à 11,
**caractérisé en ce qu'**
il présente deux éléments de blocage (20, 21) et deux éléments de blocage antagonistes (14, 15) engrenés dans ceux-ci à l'état fermé du dispositif de blocage et munis d'une première et d'une deuxième dentures (38, 39) respectives ou d'une première et d'une deuxième dentures antagonistes (40, 41).

13. Dispositif de blocage selon l'une quelconque des revendications 1 à 12,
**caractérisé en ce que**
l'élément de blocage (20, 21) présente deux premières et deux deuxièmes dentures (38, 39), et l'élément de blocage antagoniste (14, 15) présente deux premières et deux deuxièmes dentures antagonistes (40, 41) engrenées dans les dentures (38, 39) de l'élément de blocage (20, 21) à l'état fermé du dispositif de serrage.

14. Dispositif de blocage selon la revendication 13,
**caractérisé en ce que**
deux rails dentés (37) disposés sur l'élément de blocage (20, 21) se situent de part et d'autre du boulon de serrage (17) et présentent chacun une première et une deuxième dentures (38, 39).

15. Dispositif de blocage selon la revendication 13 ou 14,
**caractérisé en ce que**
les deux premières dentures (38) et les deux deuxièmes dentures antagonistes (39) sont décalées les unes par rapport aux autres dans le sens de réglage (46) d'un intervalle (d) qui correspond à une partie de la distance (a) entre des dents successives (42, 43).

16. Dispositif de blocage selon l'une quelconque des revendications 13 à 15,
**caractérisé en ce que**
les deux premières dentures antagonistes (40) et les deux deuxièmes dentures antagonistes (41) sont décalées les unes par rapport aux autres dans le sens de réglage (46) d'un intervalle qui correspond à une partie de la distance (a) entre des dents successives (44, 45).

17. Dispositif de blocage selon la revendication 15 ou 16,
**caractérisé en ce que**
la distance (b1) entre les plans médians entre la première et la deuxième dentures (38, 39) diffère de la distance (b2) entre les plans médians entre la première et la deuxième dentures antagonistes (40, 41).

18. Dispositif de blocage selon l'une quelconque des revendications 3 à 12,
**caractérisé en ce que**
le rail denté (37) présente une ouverture de passage (68) pour le passage du boulon de serrage (17), et la première denture (38) ainsi que la deuxième denture (39) se situent sur des faces du rail denté tournées l'une vers l'autre par rapport au boulon de serrage (17), et les dentures antagonistes (40, 41) associées de l'élément de blocage antagoniste (15) se situent par analogie sur des faces de l'élément de blocage antagoniste (15) tournées l'une vers l'autre par rapport au boulon de serrage (17).

19. Dispositif de blocage selon la revendication 18,
**caractérisé en ce que**
le boulon de serrage (17) traverse l'ouverture de passage (68) avec jeu dans un sens (58) perpendiculaire au sens de fermeture (57) et au sens de réglage (46).

20. Dispositif de blocage selon l'une quelconque des revendications 1 à 19,
**caractérisé en ce que**
lors d'un réglage de l'arbre de direction (1) de la colonne de direction dans le sens de réglage (46), l'élément de blocage (20, 21) ou l'élément de blocage antagoniste (14, 15) est déplacé avec l'arbre de direction (1), alors que le deuxième élément n'est pas déplaçable dans ce sens de réglage par rapport à un élément de console (3) solidaire du châssis et portant l'arbre de direction (1) ou un tube enveloppe (2) logeant l'arbre de direction (1).

21. Dispositif de blocage selon l'une quelconque des revendications 1 à 20,
**caractérisé en ce qu'**
à l'état ouvert du dispositif de serrage, un dispositif de ressort (31, 32, 69) distancie l'élément de blocage (20, 21) par rapport à l'élément de blocage antagoniste (14, 15), et les dentures (38, 39) ne sont pas engrenées dans les dentures antagonistes (40, 41).
